# EUROPEAN PATENT APPLICATION

(11) **EP 4 458 153 A2**
(43) Date of publication of application: **06.11.2024**
(21) Application number: 24201865.3
(22) Date of filing: 25.09.2014
(51) Int. Cl.: A01N 57/20

(54) **PESTICIDE COMPOSITION AND METHOD**

(30) Priority: 26.09.2013 EP 13004675
(62) Divisional of application: 14777005.1
(71) Applicant: Borregaard AS, 1721 Sarpsborg (NO)
(72) Inventor: OEVREBOE, Hans Henrik, 1721 Sarpsborg (NO); BIERRE, Frédérik, 1721 Sarpsborg (NO); GUNDERSEN, Stig Are, 1721 Sarpsborg (NO); GARGULAK, Jerry, Rothschild, 54474 (US); ROSENBERG, Marianne, 1721 Sarpsborg (NO)
(74) Representative: Tostmann, Holger Carl

(57) **Abstract**

The present invention relates to a pesticide composition comprising at least one pesticide compound and at least one adjuvant comprising a microfibrillated cellulose. The invention also relates to a method for preparing a pesticide composition comprising the admixture of a microfibrillated cellulose, and a pesticide compound.

## Description

The present invention relates to a pesticide composition comprising a pesticide compound and an adjuvant. More particularly, the present invention relates to such a composition comprising a microfibrillated cellulose (MFC). The present invention also relates to the use of such a pesticide composition for controlling undesired plant growth, undesired attack by insects or mites, fungi, and/or for regulating the growth of plants.

### Background of the Invention

Pesticides like herbicides, insecticides and fungicides are widely used in the agricultural industry. There are only a few large agrochemical companies that still develop new pesticides; other agrochemical companies mostly produce generic pesticides. Developing new pesticides can be time consuming and expensive and it can be difficult to get the new pesticides approved for use. Therefore, there is an increasing interest in the development and use of adjuvants in the agrochemical industry. An adjuvant for agrochemicals is a compound that enhances the biological activity of the active ingredient (pesticide). Adjuvants can improve the biological activity of the pesticides by for example reducing spray drift, increasing the wetting of the plant surface or enhancing the uptake of the pesticide into the plant leaves.

The industry has recognized that some of the more commonly used adjuvants may be irritant and/or toxic and/or harmful the environment. Therefore, there is an increasing emphasis on toxicity and the environmental impact of adjuvants and there is a focus on developing environmentally friendly and "green" adjuvants.

It is therefore an object of the present invention to provide an environmentally friendly adjuvant for pesticide compositions, which increases the activity of the pesticide against the target pest.

As will be discussed in more detail below, the solution to this problem is the use of microfibrillated cellulose (MFC) as such an adjuvant.

Derivatized microfibrillated cellulose that comprises cationic substituents is described in WO 01/66600 A1. This document disclsoes that the derivatized cationic MFC might be used in soil treatment and for controlled, sustained or delayed release of agricultural materials.

### Summary of the Invention

The above mentioned object, and other objects, is/are achieved by the composition of claim 1 as well as the method and use of claims 14, 15 and 16, respectively.

In particular, the present invention is directed to a pesticide composition comprising at least one microfibrillated cellulose (being an adjuvant).

In certain embodiments, the microfibrillated cellulose is free of cationic substituents.

In certain embodiments, the amount of the microfibrillated cellulose is 0.5% by weight or less.

In certain embodiments, the amount of the microfibrillated cellulose is from 0.001 - 0.4% by weight, preferably 0.0025% - 0.3%, more preferably 0.005% -0.2%, and most preferably 0.01%-0.1%.

In certain embodiments, the microfibrillated cellulose (MFC) is an unmodified MFC and/or a chemically modified MFC having neutral or negatively charged substituents and/or is a physically modified MFC.

In certain embodiments, the microfibrillated cellulose (MFC) is an unmodified MFC and/or a chemically modified MFC having neutral or negatively charged substituents and is present in an amount of from 0.001 % - 0.4% by weight, preferably 0.0025% - 0.2%, more preferably 0.01%-0.1%.

In certain embodiments, the microfibrillated cellulose (MFC) is a physically modified MFC and is present in an amount of from 0.001 - 0.4% by weight, preferably 0.0025% - 0.2%, more preferably 0.01%-0.1%.

In certain embodiments, the pesticide is a herbicide, insecticide, growth regulator and/or fungicide.

While the pesticide may be present as a lipophilic pesticide, it is preferred that the pesticide is a hydrophilic pesticide. The meaning of the term "hydrophilic", as used in accordance with the present invention is the term adopted by the IUPAC Compendium of Chemical Terminology, i.e. relates to *"the capacity of a molecular entity or of a substituent to interact with polar solvents, in particular with water, or with other polar entities".*

In certain such embodiments, the pesticide is a herbicide, in particular a hydrophilic herbicide, selected from the groups consisting of Acetyl CoA carboxylase inhibitors, Acetolacetate synthase and/or Acetohydroxy acid synthase inhibitors, Photosystem II inhibitors, Photosystem I inhibitors, Carotenoid biosynthesis inhibitors, Enolpyruvyl shikimate-3-phosphate synthase inhibitors, Glutamine synthase inhibitors and/or Synthetic auxins.

In other embodiments, the pesticide is an insecticide selected from the group consisting of Organophosphates.

In certain embodiments, the pesticide is a growth regulator selected from the group of Gibberellin biosynthesis inhibitors.

In certain embodiments, the pesticide is a herbicide and the herbicide is glyphosate.

In a second aspect the present invention relates to a method for preparing a pesticide composition according to the present invention, comprising the mixing of at least one microfibrillated cellulose, and at least one pesticide compound.

In a third aspect, the present invention relates to a use of a microfibrillated cellulose as an adjuvant, in particular as an adjuvant in a pesticide composition.

In a fourth aspect, the present invention relates to a use of a microfibrillated cellulose as a humectant for pesticide spray solutions.

### Detailed Description of the Invention

The invention will be described in the following with reference to the enclosed figures, wherein:
- **Figure 1**: shows the effect of MFC on glyphosate uptake in the Black night shade plant for different MFC concentrations.
- **Figure 2**: shows the effect of MFC on glyphosate uptake in the Winter wheat plant for different MFC concentrations.
- **Figure 3**: shows the effect of MFC on Glyphosate efficiency for four types of weed species, in a "real-life" corn field test.
- **Figure 4**: shows the effect of MFC on Glufosinate efficiency for four types of weed species in a "real-life" corn field test.

Microfibrillated cellulose (MFC) as used within the claimed composition and in the meaning of the present invention relates to cellulose fibers of various origins. In particular, MFC according to the present invention relates to cellulose in fiber form that has been subjected to a mechanical treatment in order to increase the fibers' specific surface and to reduce their size in terms of cross-section and of length, wherein said size reduction leads to a fiber diameter in the nanometer range and a fiber length in the micrometer range.

MFC is prepared from cellulose fibers which are defibrillated using high pressure or high mechanical force. Due to its large surface area and a high aspect ratio (length to width ratio), microfibrillated cellulose is believed to have a good ability to form rigid networks. The large surface area of the MFC and the high amount of accessible hydroxyl groups results in the MFC typically having high water holding capacity. The term MFC, in accordance with the present invention, encompasses a single kind of microfibrillated cellulose as well as a mixture of structurally different microfibrillated celluloses.

The microfibrillated cellulose in accordance with the present invention may be unmodified with respect to its functional group or may be physically modified or chemically modified resulting in neutral or negatively charged groups on the microfibril's surface, or both. In one embodiment, the MFC, in accordance with the present invention is substantially free of cationic substituents.

Chemical modification of the surface of the cellulose microfibrils in the present invention is preferably achieved by various reactions of surface functional groups of the cellulose microfibrils, and more particularly of the hydroxyl functional groups, resulting in neutral or negatively charged groups on the microfibril surface, preferably by: oxidation, silylation reactions, etherification reactions, condensations with isocyanates, alkoxylation reactions with alkylene oxides, or condensation or substitution reactions with glycidyl derivatives. Chemical modification may take place before or after the defibrillation step.

The cellulose microfibrils may also be modified by a physical route, either by adsorption at the surface, or by spraying, or by coating, or by encapsulation of the microfibril. Preferred modified microfibrils can be obtained by physical adsorption of at least one compound. The microfibrils can be modified by physical adsorption of at least one amphiphilic compound (surfactant).

Preferably, microfibrils are modified by physical adsorption of at least one non-ionic surfactant. EP2 408 857 describes processes of preparing surface modified MFC. The physical modification of the MFC surface may take place before or after the defibrillation step.

Microfibrillated cellulose is described, among others in US 4 481 077, US 4 374 702 and US 4 341 807. According to US 4 374 702 ("Turbak"), microfibrillated cellulose has properties distinguishable from previously known celluloses. MFC in accordance with "Turbak" is produced by passing a liquid suspension of cellulose through a small diameter orifice in which the suspension is subjected to a large pressure drop and a high velocity shearing action followed by a high velocity decelerating impact, and repeating the passage of said suspension through the orifice until the cellulose suspension becomes a substantially stable suspension. The process converts the cellulose into microfibrillated cellulose without substantial chemical change of the cellulose starting material.

An improved process for obtaining particularly homogeneous MFC is described in WO 2007/091942.

In principle, the raw material for the cellulose microfibrils may be any cellulosic material, in particular wood, annual plants, cotton, flax, straw, ramie, bagasse (from sugar cane), certain algae, jute, sugar beet, citrus fruits, waste from the food processing industry or energy crops or cellulose of bacterial origin or from animal origin, e.g. from tunicates.

The microfibrillated cellulose in accordance with the present invention may be produced according to any process known in the art. Preferably, said method comprises at least one mechanical step and at least one homogenizing step. The mechanical pretreatment step preferably is or comprises a refining step. The method can also comprise a chemical pretreatment step. One examples of such pretreatment step might be oxidation of the C6 hydroxyl groups on the surface of the microfibrils to carboxylic acids. The negative charges of the carboxylic groups cause repulsion between the microfibrills which aids the defibrillation of the cellulose.

The purpose of the mechanical pretreatment step in accordance with the present process for manufacturing MFC is to "beat" the cellulose pulp in order to increase the accessibility of the cell walls, i.e. increase the surface area and therefore to increase the water retention value. In the refiner that is preferably used in the mechanical pretreatment step, one or two rotating disk(s) is/are employed, i.e. the cellulose pulp slurry is subjected to shear forces.

Prior to the mechanical or chemical pretreatment step, or in between the mechanical or chemical pretreatment steps, or as the mechanical pretreatment step, enzymatic (pre)treatment of the cellulose pulp is an optional additional step that may be preferred for some applications. In regard to enzymatic pretreatment in conjunction with microfibrillating cellulose, the respective content of WO 2007/091942 is incorporated herein by reference.

Physical modification of the cellulose microfibril surface may occur prior to the mechanical pretreatment step, between the mechanical pretreatment step and the defibrillation step or after the defibrillation step.

The microfibrillated cellulose preferably has a high aspect ratio, which corresponds to the ratio of the length of the microfibril bundle to its diameter (UD). To this end, the pulp slurry is preferably passed through a homogenizer (a high-pressure homogenizer or a low-pressure homogenizer) and subjected to a pressure drop by forcing the pulp slurry between opposing surfaces, preferably orifices. The term "orifice" means an opening or a nozzle or a valve contained in a homogenizer suitable for homogenizing cellulose.

The microfibrillated cellulose (MFC) according to the present invention can be subjected to at least one dewatering and/or drying step. The at least one drying step is preferably selected from freeze-, spray-, roller-drying; drying in a convection oven, flash drying or the like. Never dried microfibrillated cellulose may also be used and the microfibrillated cellulose used in the present invention might have a dry content ranging from 0.1%-100% before it is added to the composition.

The pesticide composition of the present invention comprises a pesticide compound, microfibrillated cellulose as an adjuvant, and may comprise other substances and adjuvants in addition to the microfibrillated cellulose.

In accordance with the present invention the term "pesticide" refers to at least one active compound selected from the groups of herbicides, insecticides, fungicides, nematicides and/or growth regulators. Preferably the pesticide is a herbicide, fungicide, insecticide or a growth regulator. More preferably the pesticide is a herbicide.

The subject invention works in a particularly advantageous manner for hydrophilic pesticides, but may also be used for pesticides with intermediate lipophilicity and for hydrophobic pesticides.

In one embodiment the pesticide is a herbicide selected from the following herbicide classes and compounds, which all are considered to be hydrophilic:
Acetyl CoA carboxylase (ACCase) inhibitors such as Quizalofop-P-ethyl, Acetolactate synthase (ALS) inhibitors or Acetohydroxy acid synthase (AHAS) inhibitors such as Nicosulfuron, Photosystem II inhibitors such as Bentazon, Photosystem I inhibitors such as Diquat and Paraquat, Carotenoid biosynthesis inhibitors such as Amitrole and Mesotrione, Enolpyruvyl shikimate-3-phostphate (EPSP) synthase inhibitors such as Glyphosate, Synthetic auxins such as 2,4-D (acid and salts), Dicamba, MCPA (acid and salts) and fluoroxypyr and/ or Glutamine synthase inhibitors like Glufosinate.

In one embodiment the pesticide is a growth regulator selected from the class of Gibberellin biosynthesis inhibitors such as Daminozide and Chloromequat.

In one embodiment the pesticide is an insecticide selected from the class of Organophosphates, such as Acephate.

In one embodiment the pesticide is a fungicide, and preferably comprises Copper sulphate.

The pesticide amount used in the pesticide composition of the present invention can vary in a broad range and is dependent on various factors such as the type of pesticide, climate conditions, fungal, insect or plant species to be controlled and so on.

The meaning of an "*adjuvant"* according to the present invention is understood to be in accordance with the definition of an adjuvant given by ISAA (International Society for Agrochemical Adjuvants): *An adjuvant is a substance without significant pesticide properties, added to a agricultural composition to aid or modify the activity of this chemical" where the function of the adjuvant can be emission reduction, wetting of the target plant, make-up of the drop deposit (for example humectancy and solubility), increased uptake of the pesticide into the target, improved rainfastness, reduced antagonist effect, overcoming compatibility problems and*/*or foam reduction.*

Preferably, the function of the adjuvant (MFC) described in the present invention is to help increasing the uptake of the pesticide and/or to modify of the make-up of the drop deposit (for example by means of increased humectancy).

It has been surprisingly found during the course of achieving the present invention that when MFC is added to a pesticide composition as an adjuvant, the efficiency of the pesticide is increased at surprisingly low concentrations of MFC.

Without wishing to be bound to any theory it is believed that MFC acts as a humectant, keeping water in the drop deposit longer and thereby increasing the time the pesticide is available for affecting the target pest. This is particularly advantageous for hydrophilic pesticides. For applications involving penetration of plant leaves by the active ingredient, it is also believed that MFC affects the actual penetration of the plant leaf, possibly by attracting water from the interior of the leaf to the surface of the plant leaf resulting in a change in the properties of the plant leaf surface. This is important for hydrophilic herbicides as it can be difficult for the hydrophilic herbicides (for example Glyphosate) to penetrate the lipophilic surface of the plant leaves.

The microfibrillated cellulose in accordance with the present invention as used as an adjuvant in pesticide compositions may either be included in the pesticide formulation (built-in adjuvant) or added to the tank-mix by the farmer (tank-mix adjuvant).

In one embodiment, the MFC acts as a humectant for pesticide spray solutions.

In exemplary embodiments, MFC was found to have a surprisingly high effect on the activity of the herbicide Glyphosate on several plant species using low concentrations of the MFC.

In one embodiment, the effect of MFC on the herbicide Glyphosate was tested under "rela-life" growth conditions on a corn crop test plot in the state of Iowa in the US. MFC was then tested in combination with the commercially available Glyphosate formulation Roundup powermax^{®}. It was observed that MFC also has a significant effect on Glyphosate efficiency under "real life" field conditions.

In another embodiment it was found that MFC also has a surprisingly high effect on the activity of the herbicide Glufosinate, as also tested on a corn field test plot in the State of Iowa.

### EXAMPLES

Within the following examples, the pesticides were applied at a dosages that are below the fully effective dosage, as it is then easier to identify the adjuvant effects. The efficacy of the MFC on pesticide uptake was determined by harvesting the aerial parts of the plants several weeks after treatment and determining the fresh weight. Within the following examples, all percentages stated refer to wt-%.

For the field trials on corn crops, the efficacy of MFC on pesticide uptake was evaluated by the %kill of the weeds (100% meaning a 100% kill and no weeds left in the field).

### Experimental methods

### Plant material

Black night shade (SOLNI), winter wheat (*Triticum aestivum,* cv. Rektor) and wild oat (*Avena Fatua, L,* (AVEFA)) were grown in a growth chamber under 14 h of light, at 19/14 (±0.5) °C (day/night) temperature, and in 70-80% (day/night) relative humidity. Light was provided by high-pressure sodium lamps (SON-T), high-pressure mercury lamps (HPI) and fluorescent tubes to give 250 pmol m⁻² s⁻¹ at leaf level. The seedlings were grown in 12cm-diam. plastic pots filled with a mixture of sand and humic potting soil (1:4 by volume). The pots were placed on subirrigation matting, which was wetted daily with nutrient solution. After emergence the seedlings were thinned to 1 (Black night shade), 5 (Wild oat) or 6 (wheat) plants per pot. Black night shade was treated at the 4-leaf stage, wheat and wild oat was treated at the 3-leaf stage. The fresh weights of the plants were measured 14 days after treatment (Black night shade) or 21 days after treatment (wheat and wild oat).

For the corn field trials, the corn crops were planted and the weeds that had emerged were sprayed 26 days after plating. The effect of the herbicide and MFC on the weeds was evaluated 14 days after the treatment. Four different weed plant species were evaluated, Giant foxtail (SEFTA), Velvet leaf (ABUTH), Common waterhemp (AMATA) and Common cocklebur (XANSS).

### Pesticide application

For the greenhouse experiments, the pesticide solutions were applied with an air-pressured laboratory track sprayer having Teejet TP8003E nozzles and delivering 200 L/ha at 303 kPa.

For the field trials, the pesticide solutions were applied with a Bacman hand sprayer with a TT nozzle at an operating pressure of 40 PSI and a ground speed of 3 MPH.

### Treatment solutions

For the greenhouse experiments, the glyphosate product MON 8717 (480 g/L a.e. IPA salt or 2.84 M without additions) was used to prepare the herbicide solutions. A sub-optimal rate of herbicide was used, giving in theory a 0-20% growth reduction without adjuvant. This enables an easier evaluation of differences between formulations/adjuvants. In Black night shade, glyphosate was applied at a concentration of 0.6 mM (equivalent to 20.3 g a.e./ha at 200 Uha), and in wheat at a concentration of 2.4 mM (equivalent to 81.2 g a.e./ha at 200 Uha). Nicosulfuron (sulfonyl urea DPX U-9360-77) was also used at a sub-optimal rate at a concentration of 6 g ai/ha.

For the corn field trials, the Glyphosate (in the Roundup powermax^{®} formulation) was applied at a rate of 7.26 fluid ounces per acre (FL Oz/A). The Glufosinate (in the commercially available Liberty^{®} formulation) was applied at a rate of 9.57 fluid ounces per acre (FL Oz/Acre).

### Example 1

An aqueous solution of Glyphosate (0.6 mM) and MFC (0.01%) was applied to Black nightshade. The experiment and evaluation were performed as described above in experimental methods.

### Example 2

An aqueous solution of Glyphosate (0.6 mM) and MFC (0.005%) was applied to Black nightshade. The experiment and evaluation were performed as described above in experimental methods.

### Example 3

An aqueous solution of Glyphosate (0.6 mM) and MFC (0.0025%) was applied to Black nightshade. The experiment and evaluation were performed as described above in experimental methods.

### Example 4

An aqueous solution of Glyphosate (0.6 mM) and physically modified MFC (0.01%) was applied to Black nightshade. The experiment and evaluation were performed as described above in experimental methods.

### Example 5

An aqueous solution of Glyphosate (0.6 mM) and physically modified MFC (0.005%) was applied to Black nightshade. The experiment and evaluation were performed as described above in experimental methods.

### Example 6

An aqueous solution of Glyphosate (0.6 mM) and physically modified MFC (0.0025%) was applied to Black nightshade. The experiment and evaluation were performed as described above in experimental methods.

### Example 7 (comparative)

An aqueous solution of Glyphosate (0.6 mM) and a tallow amine ethoxylate based surfactant, Agnique^{®} GPU (0.01%) was applied to Black nightshade. The experiment and evaluation were performed as described above in experimental methods.

### Example 8 (comparative)

An aqueous solution of Glyphosate (0.6 mM) was applied to Black nightshade. The experiment and evaluation were performed as described above in experimental methods.

### Example 9

An aqueous solution of Glyphosate (2.4 mM) and MFC (0.01%) was applied to Winter wheat. The experiment and evaluation were performed as described above in experimental methods.

### Example 10

An aqueous solution of Glyphosate (2.4 mM) and MFC (0.005%) was applied to Winter wheat. The experiment and evaluation were performed as described above in experimental methods.

### Example 11

An aqueous solution of Glyphosate (2.4 mM) and MFC (0.0025%) was applied to Winter wheat. The experiment and evaluation were performed as described above in experimental methods.

### Example 12

An aqueous solution of Glyphosate (2.4 mM) and physically modified MFC (0.01%) was applied to winter wheat. The experiment and evaluation were performed as described above in experimental methods.

### Example 13

An aqueous solution of Glyphosate (2.4 mM) and physically modified MFC (0.005%) was applied to Winter wheat. The experiment and evaluation were performed as described above in experimental methods.

### Example 14

An aqueous solution of Glyphosate (2.4 mM) and physically modified MFC (0.0025%) was applied to winter wheat. The experiment and evaluation were performed as described above in experimental methods.

### Example 15 (comparative)

An aqueous solution of Glyphosate (2.4 mM) was applied to winter wheat. The experiment and evaluation were performed as described above in experimental methods.

### Example 16

An aqueous solution of Nicosulfuron (6 g ai/ha) and physically modified MFC was applied to wild oat. The experiment and evaluation were performed as described above in experimental methods.

### Example 17 (comparative)

An aqueous solution of Nicosulfuron (6 g ai/ha) was applied to wild oat. The experiment and evaluation were performed as described above in experimental methods.

### Example 18

An aqueous solution of Glyphosate (Roundup powermax formulation, 7.26 FL Oz/A) and MFC (0.02%) was applied to a corn field. The experiment and evaluation were performed as described above in experimental methods.

### Example 19 (comparative)

An aqueous solution of Glyphosate (Roundup powermax formulation, 7.26 FL Oz/A) was applied to a corn field. The experiment and evaluation were performed as described above in experimental methods.

### Example 20

An aqueous solution of Glufosinate (Liberty formulation, 9.57 FL OzlA) and MFC (0.02%) was applied to a corn field. The experiment and evaluation were performed as described above in experimental methods.

### Example 21 (comparative)

An aqueous solution of Glufosinate (Liberty formulation, 9.57 FL Oz/A) was applied to a corn field. The experiment and evaluation were performed as described above in experimental methods.

### Results

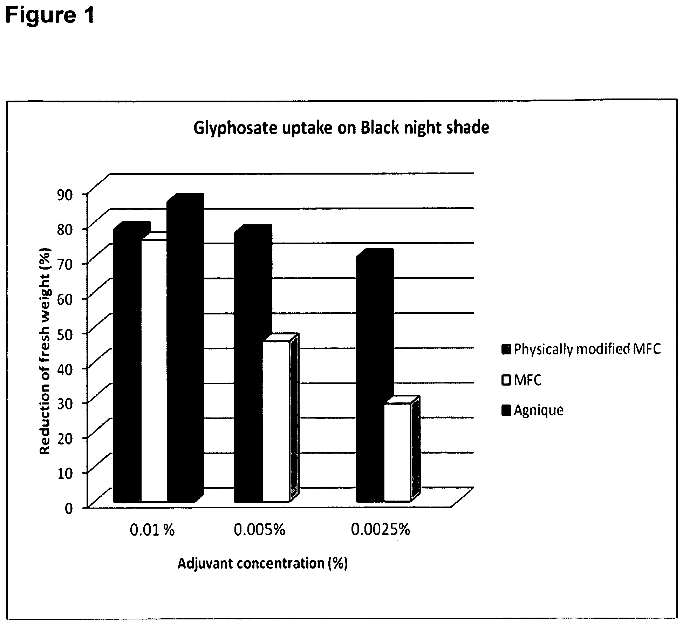

The results of the experiments are given in Tables 1-4 and in Figures 1-4.

**Table 1 Glyphosate performance on Black nightshade**

| **Example** | **Herbicide** | **Type of adjuvant** | **MFC conc. (%)** | **Reduction in fresh weight compared to Glyphosate without adjuvant (%)** |
|---|---|---|---|---|
| 1 | Glyphosate | MFC | 0.01 | 75 |
| 2 | Glyphosate | MFC | 0.005 | 46 |
| 3 | Glyphosate | MFC | 0.0025 | 28 |
| 4 | Glyphosate | Physically modified MFC | 0.01 | 78 |
| 5 | Glyphosate | Physically modified MFC | 0.005 | 77 |
| 6 | Glyphosate | Physically modified MFC | 0.0025 | 70 |
| 7 | Glyphosate | Agnique GPU | 0.01 | 86 |
| 8 | Glyphosate | - | - | - |

The result from example 1 demonstrates that MFC has a remarkably high effect on Glyphosate uptake on Black nightshade. As shown in examples 2 and 3, MFC has a significant effect on glyphosate uptake even at surprisingly low concentrations. At 0.01% concentration the fresh weight was reduced by 75% compared to the fresh weight of the plant treated with Glyphosate alone (example 8). The effect of MFC on Glyphosate uptake at 0.01% concentration (example 1) is comparable to the effect of the commercially available tallow amine ethoxylate based adjuvant Agnique^{®} GPU at 0.01% concentration (example 7). The tallow amine ethoxylate based adjuvants are one of the most efficient adjuvants for enhancing Glyphosate performance that are known today. The results from examples 1 to 8 are also illustrated in Figure 1.

Physical modification of the surface of the MFC results in an increase in Glyphosate efficiency compared to the unmodified MFC, particularly remarkable at low concentrations (examples 5 and 6).

**Table 2 Glyphosate performance on Winter wheat**

| **Example** | **Herbicide** | **Type of adjuvant** | **MFC conc. (%)** | **Reduction in fresh weight compared to Glyphosate without adjuvant (%)** |
|---|---|---|---|---|
| 9 | Glyphosate | MFC | 0.01 | 54 |
| 10 | Glyphosate | MFC | 0.005 | 38 |
| 11 | Glyphosate | MFC | 0.0025 | 36 |
| 12 | Glyphosate | Physically modified MFC | 0.01 | 54 |
| 13 | Glyphosate | Physically modified MFC | 0.005 | 56 |
| 14 | Glyphosate | Physically modified MFC | 0.0025 | 47 |
| 15 | Glyphosate | - | - | 0 |

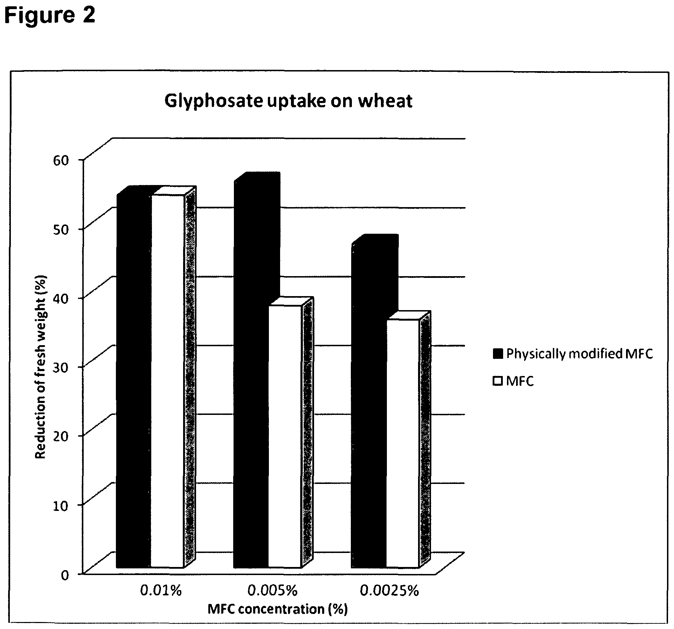

Examples 9 to 15 show that MFC and physically modified MFC also had a high effect on increasing the efficiency of Glyphosate on winter wheat (Table 2). MFC was most effective at 0.01% concentration while the surface modified MFC was efficient down to a 0.0025% concentration. The results from examples 9 to 15 are also illustrated in Figure 2.

These results show that MFC has a significant effect on glyphosate uptake on different types of plant species.

Surprisingly, it was also found that the physically modified MFC was efficient for enhancing the uptake of a less hydrophilic pesticide, Nicosulfuron. As shown in Table 3, by addition of the physically modified MFC the fresh weight was reduced with 45% compared to when Nicosulfuron was applied without addition of an adjuvant.

**Table 3 Nicosulfuron performance on Winter wheat plants**

| **Example** | **Herbicide** | **Type of adjuvant** | **MFC conc. (%)** | **Reduction in fresh weight compared to Nicosulfuron without adjuvant (%)** |
|---|---|---|---|---|
| 16 | Nicosulphuron | Physically modified MFC | 0.1 | 45 |
| 17 | Nicosulphuron | - | - | 0 |

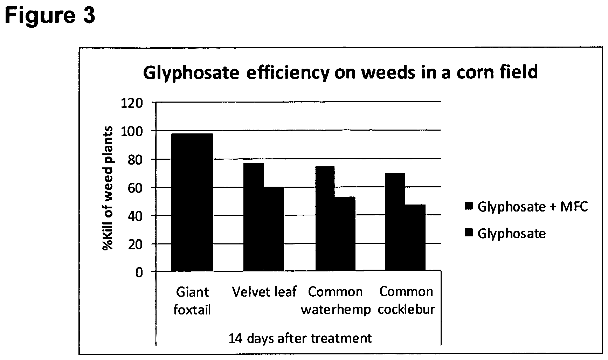

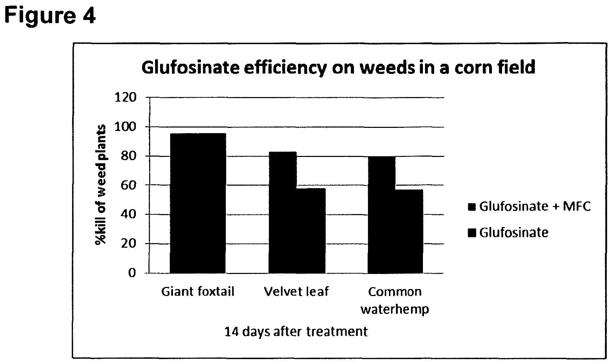

Tests performed on MFC efficiency on the herbicides Glyphosate and Glufosinate on a corn field test plot in the State of Iowa, US are described in example 18 - 21. The results from the tests are shown in Table 4 and Figures 3 and 4. Four different plant species were evaluated, Giant foxtail (SETFA), Velvet leaf (ABUTH), Common water hemp (AMATA) and Common cocklebur (XANSS). For Glyphosate (examples 18 and 19) a significant effect of the MFC was seen on Glyphosate efficiency for three of the plant species. These are plant species that generally can be difficult to control with Glyphosate. For Giant foxtail (SETFA) the effect was close to a 100% kill also without MFC so it was not possible to evaluate the MFC effect. Experiments with Glufosinate (examples 20 and 21) show a clear increase in the kill of weeds for the Velvet leaf (ABUTH) and Common water hemp (AMATA). However, similarly to Glyphosate, the efficiency of MFC addition against Giant foxtail (SETFA) was impossible to evaluate from these experiments.

**Table 4 Glyphosate (Roundup powermax^{®}) and Glufosinate (Liberty^{®}) performance on weeds in a corn field test plot**

| | | | **%kill of weeds (%)^{b}** | | | |
|---|---|---|---|---|---|---|
| **Example** | **Herbicide** | **MFC conc.^{a} (%)** | **Giant foxtail (SETFA)** | **Velvet leaf (ABUTH)** | **Common waterhemp (AMATA)** | **Common cocklebur (XANSS)** |
| 18 | Glyphosate | 0.02 | 98 | 77 | 75 | 70 |
| 19 | Glyphosate | - | 98 | 60 | 53 | 47 |
| 20 | Glufosinate | 0.02 | 96 | 83 | 80 | 99 |
| 21 | Glufosinate | - | 96 | 58 | 57 | - |

| | | | | | | |
|---|---|---|---|---|---|---|
| ^{a}Unmodified MFC. 14 days after treatment | | | | | | |

## Claims

1. Pesticide composition comprising:
i) at least one pesticide compound, and
ii) at least one adjuvant comprising a microfibrillated cellulose.

2. Pesticide composition of claim 1, where the microfibrillated cellulose is free of cationic substituents.

3. Composition of claim 1 or 2, wherein the amount of the microfibrillated cellulose is 0.5% by weight or less.

4. Composition of any of the preceding claims, wherein the amount of the microfibrillated cellulose is from 0.001% - 0.4% by weight, preferably 0.0025% to 0.3%, more preferably 0.005% to 0.2%, and most preferably 0.005% to 0.1%.

5. Composition of any of the preceding claims, wherein said microfibrillated cellulose (MFC) is an unmodified MFC and/or a chemically modified MFC having neutral or negatively charged substituents and/or a physically modified MFC.

6. Composition of claim 5, wherein the microfibrillated cellulose (MFC) is an unmodified MFC and/or a chemically modified MFC having neutral or negatively charged substituents and is preferably present in an amount of from 0.001% by weight to 0.4% by weight, preferably 0.0025% to 0.2%, more preferably 0.005% to 0.1%.

7. Composition of claim 5, wherein the microfibrillated cellulose (MFC) is a physically modified MFC and is preferably present in an amount of from 0.001% by weight to 0.4% by weight, preferably 0.0025% to 0.2%, more preferably 0.0025% to 0.1%.

8. Composition of any of the preceding claims, wherein said pesticide is a herbicide, insecticide, growth regulator and/or fungicide.

9. Composition of claim 8, wherein said pesticide is a hydrophilic pesticide.

10. Composition of claim 8 or 9, wherein said pesticide is a herbicide selected from the groups consisting of Acetyl CoA carboxylase inhibitors, Acetolacetate synthase and/or Acetohydroxy acid synthase inhibitors, Photosystem II inhibitors, Photosystem I inhibitors, Carotenoid biosynthesis inhibitors, Enolpyruvyl shikimate-3-phosphate synthase inhibitors, Glutamine synthase inhibitors and/or Synthetic auxins.

11. Composition of claim 8 or 9, wherein said pesticide is an insecticide selected from the group consisting of Organophosphates.

12. Composition of claim 8 or 9, wherein said pesticide is a growth regulator selected from the group of Gibberellin biosynthesis inhibitors.

13. Composition of claim 10, wherein said herbicide is glyphosate.

14. A method for preparing a pesticide composition of any of the preceding claims comprising mixing at least one microfibrillated cellulose, and at least one pesticide compound.

15. Use of microfibrillated cellulose as an adjuvant, in particular as an adjuvant in the pesticide composition of any of claims 1 to 14.

16. Use of a microfibrillated cellulose as a humectant for pesticide spray solutions.
